# EUROPEAN PATENT APPLICATION

(11) **EP 1 460 555 A1**
(43) Date of publication of application: **22.09.2004**
(21) Application number: 03290699.2
(22) Date of filing: 20.03.2003
(51) Int. Cl.: G06F 15/78, H04M 11/06

(54) **Multiprocessor Architecture for DSL applications**

(71) Applicant: ALCATEL, 75008 Paris (FR)
(72) Inventor: Gendarme, Christophe Bernard André, 2000 Antwerpen (BE); Marichal, Roel Luc Rita, 2540 Hove (BE); Aerts, Bert René Anna Maria, 1840 Steenhuffel (BE); Van Hoogenbemt, Stefaan Margriet Albert, 2800 Mechelen (BE)
(74) Representative: Narmon, Gisèle Marie Thérèse

(57) **Abstract**

A Digital Subscriber Line [DSL] or Very High Speed Digital Subscriber Line [VDSL] telecommunication device with a downstream path and an upstream path, each path comprising a plurality of processors (P1-P4) interconnected with a plurality of memories (M1-M6). The processors and the memories are arranged as input/output border column and row of an interconnecting matrix architecture constituted by interconnection devices (I₁₁-I₄₆) able to interconnect the processors of the column with the memories of the row. This arrangement allows mapping different architectures simply by changing the status of the interconnection devices. The matrix arrangement provides a very flexible simulation platform for different possible applications and, even when implemented on silicon, the ASIC has a maximum of flexibility and can be adapted to different standard.

## Description

The present invention relates to a Digital Subscriber Line [DSL] telecommunication device with a first path for transferring data in a first direction and a second path for transferring data in a second direction opposite to said first direction, said telecommunication device including a plurality of processors interconnected with a plurality of memories.

Such a Digital Subscriber Line [DSL] telecommunication device is a classical circuit generally known in the art. The DSL device comprises separated downstream and upstream paths. Each path is constituted by a cascade coupling of circuits, generally processors, alternating with memories. The memories are buffers or data storage means adapted to store downstream and upstream data while it is transferred between the processors.

One of the problems with this known telecommunication device is that, generally because of standardization requirements, the memories need to cover different frequency ranges in one or in both directions. As a consequence, the size of the memories is very often over-dimensioned. For instance, when the downstream path operates on two different frequency ranges and when the upstream path operates on another frequency range situated in-between the two downstream frequency ranges, an important part of the memories of the downstream path is not used.

Another problem is that there is no telecommunication device that is adapted to support multiple standards. Distinct top-level architectures are necessary for each different application.

Also another problem with the known telecommunication device is that it is not adapted to changes. In other words, other applications can, for instance, not be simulated without rebuilding a new telecommunication device.

An object of the present invention is to provide a DSL telecommunication device of the above known type but wherein the use of the memories and the processors is optimized, and of which the architecture can be adapted to different standards and/or simulation processes.

According to the present invention, this object is achieved due to the fact that said plurality of processors and said plurality of memories are respectively arranged as an input/output border column and an input/output border row of an interconnecting matrix architecture, said matrix architecture being constituted by a plurality of interconnection devices adapted to interconnect the processors of said column with the memories of said row.

In this way, the DSL telecommunication device allows to map different architectures simply by changing the status of the interconnection devices. The matrix arrangement provides a very flexible simulation platform for different possible architectures, and even when implemented on silicon, the ASIC has a maximum of flexibility and can be adapted to any standard.

In a preferred embodiment, the present invention is characterized in that said telecommunication device further includes control circuits adapted to control said interconnection devices for establishing and releasing connections between predetermined processors and predetermined memories.

In this way, the memories may be accessed both by processors of the downstream and of the upstream paths. As a result, a same memory may be used to latch data of the downstream path and data of the upstream path, e.g. because these data are not overlapping in the frequency domain. It is thereby possible to reduce the redundancy of memory locations and to improve the operation of the processors. Since the die or chip size is thereby also reduced, the number of lines per chip can be increased and the production cost reduced.

A further characterizing embodiment is that the present invention is particularly adapted to telecommunication device operates according to the Very High Speed Digital Subscriber Line [VDSL] protocol.

The present invention further relates to a method for optimizing the transfer of data between memories and processors of a Digital Subscriber Line telecommunication device.

According to the invention, this method is particularly characterized in that said memories are shared by said processors, each processor being able to read data from or to write data to any of said memories under control of control circuits.

In this way, at almost each stage of the data process in the paths, it is possible to use any memory to be shared by several processors.

In more detail, the present method is further characterized in that a processor may simultaneously access one or more memories during a same predetermined period of time.

By optimizing this multiple use of the memories locations, the chip size can be reduced.

A further characterizing embodiment of the present method is that, when during a said period of time a first processor needs to access a first memory already accessed by a second processor during said period of time, the access of said first processor is delayed until a next period of time.

In this way, during the operation of the system, processors and memories can be dynamically re-used within the device.

Further characterizing embodiments of the present telecommunication device are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a Digital Subscriber Line [DSL] telecommunication device as known in the prior art;
Fig. 2 shows a matrix architecture comprising interconnection devices and forming part of the DSL telecommunication device according to the invention;
Fig. 3 represents an example of interconnections between processors and memories of the DSL telecommunication device of Fig. 2; and
Figs. 4 to 6 show different periods of time during which different processors access different memories of the telecommunication device of Fig. 2.

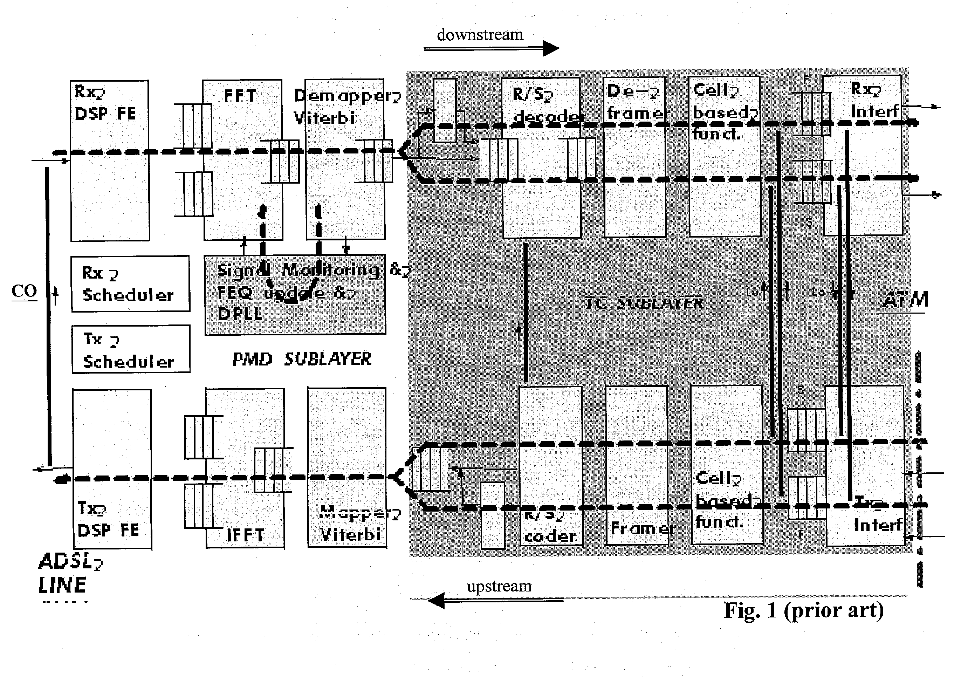

The telecommunication device shown at Fig. 1 is a known digital subscriber line [DSL] telecommunication device of the type Asymmetric Digital Subscriber Line [ADSL] or Very High Speed Digital Subscriber Line [VDSL-, VDSL or VDSL+]. Such a DSL device comprises a downstream path and an upstream path coupled between an ADSL line connected to a Central Office CO and an Asynchronous Transfer Mode receiver ATM. In this known device, both the downstream and the upstream paths are constituted by the cascade connection of processors and memories. In more detail, the downstream path is mainly constituted by the cascade connection of a Receive Digital Signal Processor Front End Rx_DSP_FE, first downstream memory means, a Fast-Transform-Transform circuit FFT, second downstream memory means DM, a Demapper/ Viterbi circuit, third downstream memory means, a R/S Decoder, fourth downstream memory means, a Deframer, a Cell based functional circuit, fifth downstream memory means and a Receiver Rx_interface. The upstream path is mainly constituted by corresponding circuits which are a Transmitter Tx_interface, first upstream memory means, a Cell based functional circuit, a Framer, a R/S Coder, second upstream memory means, a Mapper/ Viterbi circuit, third upstream memory means UM, an Inverse-Fast-Transform-Transform circuit IFFT, fourth upstream memory means and a Transmit Digital Signal Processor Front End Tx_DSP_FE. Such a known DSL device will not be described in more detail hereafter because it is not the subject of the present invention and many specifications thereof are easy to find in specialized literature.

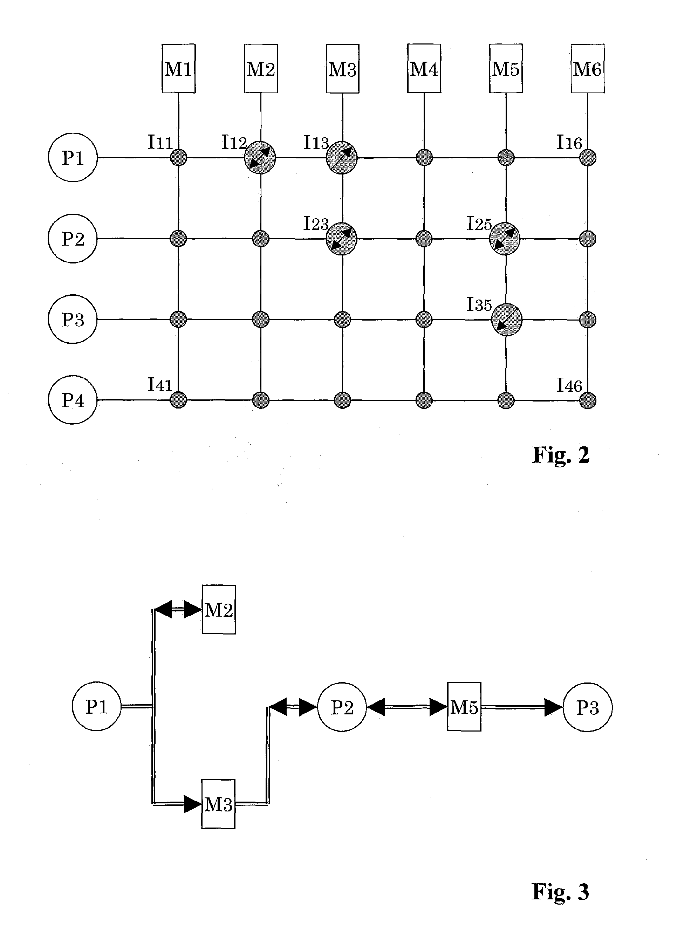

In the DSL telecommunication device of the present invention, the processors and the memories are no longer connected in cascade and separated in downstream and upstream paths. They are instead connected to inputs/outputs of an interconnecting matrix arrangement as shown on Fig. 2. In more details, all the processors, also called "masters", are arranged in an input/output border column, while all the memories, also called "slaves", are arranged in an input/output border row of the matrix arrangement. Fig. 2 is an example of implementation of the invention. The processors and memories represented therein may be most any of the processors and memories of the above described DSL device and are therefore generally labeled P1 to P4 and M1 to M6 without further defining their real function in the DSL device. The cross-points of the matrix are interconnection devices I_{rc}, where "r" is the row number (from 1 to 4 in this example) and "c" the column number (from 1 to 6 in this example). Each interconnection device I_{rc} is adapted to connect the processor attached to the row r to the memory attached to the column c. The interconnection devices are controlled by control circuits (not shown) able to allow or not a connection between the master and the slave. The control circuits are further also adapted to indicate to the interconnection devices which kind of connection is allowed: only read from the slave (e.g. I₃₅ in the example of Fig. 2), only write to the slave (e.g. I₁₃) or both read and write (e.g. I₁₂, I₂₃ and I₂₅).

An example of connections that can be realized by the interconnecting matrix arrangement is shown on Fig. 3. This example corresponds to the settings of the interconnection devices as shown in Fig. 2. The processor P1 can read and write to the memory M2 via the interconnection device I₁₂, but can only write in the memory M3 via the interconnection device I₁₃. The processor P2 can read and write in both memories M3 and M5 via I₂₃ and I₂₅ respectively, and the processor P3 can only read from the memory M5 via I₃₅. Such connections can easily be set owing to the matrix architecture and the control circuits controlling the interconnection devices. The structure can also easily be modified, e.g. to modify the DSL telecommunication device to operate according to other standards, or to perform simulations of connections.

The sharing of a memory such as M3 by two processors P1 and P2 is plausible because, for instance, according to current DSL standards an upstream frequency range is located between two downstream frequency ranges. Translated in the time domain, this means that when used for the downstream path, a memory as a "gap" of not-used locations between the two downstream frequency ranges. This gap may be used for the upstream path at its upstream frequency range. The memory belongs then to both the downstream and the upstream path and may also be shared by processors of both the downstream and the upstream path. The use of the memory is thereby optimized.

Many other applications can be supported by the matrix architecture, only by changing the interconnection parameters, i.e. the status of the interconnection devices by the control circuits. As an example, in hardware, the implementation of another standard does no longer require the creation of a new ASIC prior to start the software and system exercises. Also in software, any type of data-processing architecture can be simulated. Further improvements, fine tunings of the architecture or implementation of predetermined data algorithms can be validated at the simulation level.

Additionally, since the communication control is also handled by the matrix structure, any mechanism such as interrupts, memory management, start and follow-up of processing can be verified very fast.

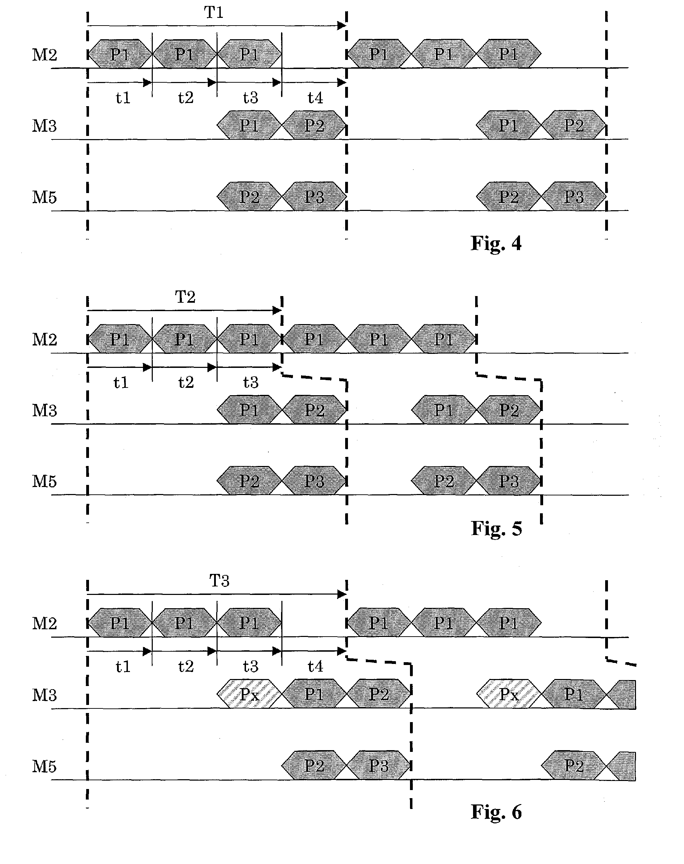

The operation of the interconnecting matrix architecture can further be optimized by a suitable control of the allocation of the memories. This will become clear from an example given below in relation with the Figs. 4, 5 and 6.

The access of a memory by a processor occurs during a time period, e.g. t1 as shown at Fig. 4. Several consecutive time periods t1, t2, t3, t4 form a frame T. In the example, the frame T1 has a length of 4 time periods t1 - t4. The processor P1 accesses the memory M2 during the 3 first time periods t1, t2, t3 of the frame T1. At the third time period t3, the processor P1 also simultaneously accesses the memory M3, while the processor P2 accesses the memory M5. During the fourth and last time period t4 of the frame T1, the processors P2 and P3 respectively access the memories M3 and M5. It is to be noted that during this fourth time period t4, not only the processor P1 doesn't access any memory, but also the memory M2 is not accessed by any processor. It is also to be noted that the memories M3 and M5 are not accessed during at least the first time period t1 of the frame T1.

By a suitable control of the interconnection devices of the interconnecting matrix architecture, the frame T1 can be reduced to a frame T2 comprising only 3 time periods t1 - t3 instead of 4 time periods t1 - t4, as shown at Fig. 5. Therein, the three first time periods t1 - t3 are identical to the three first time periods t1 - t3 as shown at Fig.4. However, during the fourth time period t4, the processor P1 already accesses the memory M1 while the processors P2 and P3 are accessing the memories M3 and M5. At the fifth time period, only the processor P1 accesses the memory M2. The sixth time period is similar to the third time period t3 where P1 accesses both M2 and M3 while P2 accesses M5. The seventh time period is similar to the fourth time period t4, and so on. The cyclical repetition, or frame T2, is thus reduced to 3 time periods t1, t2 and t3.

However, this optimization is not possible if more than one processor needs to simultaneously access a same memory. For instance, as shown at Fig. 6, if during the third time period t3 a processor Px needs to access the memory M3, the processor P1 can only access this memory M3 during the fourth time period t4. The length of the frame T3 is then again of 4 time periods t1 - t4 as for T1 at Fig. 4. More generally, if a processor needs to access a memory already accessed by another processor during a same time period, the access of the first processor is delayed by one or more time periods.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A Digital Subscriber Line [DSL] telecommunication device with a first path for transferring data in a first direction and a second path for transferring data in a second direction opposite to said first direction, said telecommunication device including a plurality of processors (P1 - P4) interconnected with a plurality of memories (M1 - M6),
***characterized in that*** said plurality of processors (P1 - P4) and said plurality of memories (M1 - M6) are respectively arranged as an input/output border column and an input/output border row of an interconnecting matrix architecture, said matrix architecture being constituted by a plurality of interconnection devices (I₁₁ - I₄₆) adapted to interconnect the processors of said column with the memories of said row.

2. The Digital Subscriber Line telecommunication device according to claim 1, ***characterized in that*** said telecommunication device further includes control circuits adapted to control said interconnection devices (I₁₁ - I₄₆) for establishing and releasing connections between predetermined processors (P1 - P4) and predetermined memories (M1 - M6).

3. The Digital Subscriber Line telecommunication device according to claim 2, ***characterized in that*** said control circuits are further adapted to control said interconnection devices (I₁₁ - I₄₆) to establish either read access or write access or both to said memories.

4. The Digital Subscriber Line telecommunication device according to claim 1, ***characterized in that*** each interconnection device of said plurality of interconnection devices is adapted to connect a particular processor of said plurality of processors with a particular memory of said plurality of memories.

5. The Digital Subscriber Line telecommunication device according to claim 1, **characterized in that** said first path is a downstream path and **in that** said second path is an upstream path.

6. The Digital Subscriber Line telecommunication device according to claim 1, **characterized in that** said telecommunication device operates according to the Very High Speed Digital Subscriber Line [VDSL] protocol.

7. A method for optimizing the transfer of data between memories (M1 - M6) and processors (P1 - P4) of a Digital Subscriber Line [DSL] telecommunication device,
***characterized in that*** said memories (M1 - M6) are shared by said processors (P1 - P4), each processor being able to read data from or to write data to any of said memories under control of control circuits.

8. The method according to claim 7, ***characterized in that*** a processor may simultaneously access one or more memories during a same predetermined period of time (t3, t4).

9. The method according to claim 8, ***characterized in that**,* when during a said period of time (t3) a first processor (P1) needs to access a first memory (M2) already accessed by a second processor (P2) during said period of time (t3), the access of said first processor is delayed until a next period of time (t4).

10. The method according to claim 8, ***characterized in that*** a predetermined number of successive periods of time (t1 - t4) are arranged in a frame (T1, T2, T3), *and **in that*** said frame is cyclically repeated.
